Europäisches Patentamt

European Patent Office

Office européen des brevets

(11) Publication number: **0 282 321 B1**

# EUROPEAN PATENT SPECIFICATION

(45) Date of publication of patent specification: **04.11.92**  (51) Int. Cl.⁵: **F02C 3/20**, F01K 25/14, C21B 7/00

(21) Application number: **88302120.6**

(22) Date of filing: **10.03.88**

(54) **Power generation.**

(30) Priority: **13.03.87 GB 8706077**

(43) Date of publication of application:
**14.09.88 Bulletin 88/37**

(45) Publication of the grant of the patent:
**04.11.92 Bulletin 92/45**

(84) Designated Contracting States:
**AT BE DE FR GB IT NL**

(56) References cited:
**EP-A- 0 038 138**
**EP-A- 0 139 310**
**DE-A- 3 241 169**
**GB-A- 2 029 855**

**Kirk-Othmer:"Encyclopedia of Chemical Technology",3rd.ed.,vol.13,J. Wiley & Sons, N.Y. pages 754-757**

(73) Proprietor: **The BOC Group plc**
**Chertsey Road**
**Windlesham Surrey GU20 6HJ(GB)**

(72) Inventor: **Latham, Paul**
**6 Challow Court Harrow Lane**
**Maidenhead Berkshire, SL6 7NU(GB)**

(74) Representative: **Wickham, Michael et al**
**c/o Patent and Trademark Department The BOC Group plc Chertsey Road**
**Windlesham Surrey GU20 6HJ(GB)**

## Description

Conventionally, heterogeneous partial oxidation and oxidation-reduction reactions use air as an oxidant. In some examples of such processes, however, it has been found that the cost of the plant required to perform the process may be reduced by using substantially pure oxygen or oxygen-enriched air as the source of the oxidant. The reason for this is that the amount of "ballast" gas (mainly nitrogen) that flows through the plant is reduced since oxygen can be produced commercially substantially free of nitrogen whereas air contains about 79% by volume of nitrogen. Accordingly, when oxygen is used the plant in which the reaction with the oxygen is carried out can be substantially smaller for a given rate of production of product. Against this advantage, however, must be weighed the capital and operating costs of the plant for separating oxygen from air. These costs are often crucial to the viability of the oxygen using process over processes that do not use oxygen.

It is known e.g. from EP-A-0 139 310 to recover combustible gas from a process for the direct reduction of iron and to use the combustible gas to produce electrical energy. The gas is burnt and the resulting combustion gases are used to generate steam which is then expanded in a turbine which is employed in the generation of electrical energy. EP-A-0 038 138 describes a process in which coal is gasified with oxygen and steam and part of the resulting fuel gas is catalytically converted to dimethyl ether. The remainder of the fuel gas is used directly in fired turbines for electrical power generation.

The invention provides a method and plant which enable the operating cost of air separation to be reduced by using combustible gas, produced in the reduction of metal oxide, to generate electricity, wherein the gas is burned and the resulting combustion products then supplied to the combustion chamber of a gas turbine. The combustible gas is compressed upstream of the combustion chamber.

According to the present invention there is provided a method comprising:

(a) operating a plant to separate oxygen from air;

(b) reacting thus separated oxygen with carbon or with carbon and steam to form a reducing gas comprising carbon monoxide and (when steam is present) hydrogen, reacting the reducing gas with a metal oxide to obtain the metal and a combustible off-gas.

(c) burning the off-gas in a combustion chamber and employing the resulting combustion products in driving a turbine which is used in the generation of electrical power on the site of the air separation plant; and

(d) employing at least some of the electrical power to meet at least some of the requirements for electrical power of the air separation plant and/or a liquefier associated therewith, characterised in that the off-gas is compressed upstream of the combustion chamber and the combustion products are fed into the turbine.

The invention also provides an integrated plant comprising;

(a) an air separation plant for separating oxygen from air;

(b) plant for reacting thus separated oxygen with carbon or with carbon and steam to form a reducing gas comprising carbon monoxide and (when steam is present) hydrogen, and for reacting the reducing gas with a metal oxide to obtain the metal and a combustible off-gas;

(c) a combustion chamber for burning the off-gas to form combustion products;

(d) a turbine associated with a generator of electricity and adapted to be driven using the combustion products; and

(e) means for employing at least some of the electrical power produced by the generator to meet at least some of the requirements for electrical power of the air separation plant or of a liquefier associated therewith, characterised in that the integrated plant additionally includes a compressor for compressing the off-gas upstream of the combustion chamber and the turbine has an inlet communicating with the outlet of the combustion chamber.

The air separation plant is preferably of the cryogenic kind. If desired it may produce one or more additional products, for example, nitrogen and/or argon. In the event that the air separation plant supplies nitrogen to a liquefier of nitrogen, the electrical power may be used to meet some of the requirements for electrical power of the liquefier.

The air separation plant may be arranged to supply the oxygen as gas at the required pressure directly from a distillation column forming part of the plant. Alternatively, a compressor may be employed to raise the oxygen to the necessary pressure.

In one example of the method according to the invention, oxygen is reacted with coal to form carbon monoxide or with coal and steam to form a gas mixture comprising hydrogen and carbon monoxide which is then reacted with metal oxide to produce metal, the arrangement being such that the off-gas from the metal making process is combustible. The metal may be iron (or steel) or may be a non-ferrous metal, for example copper or lead. The partial oxidation reaction may be separate from the (direct) reduction of metal oxide or the two reactions may take place in the same vessel.

Air is preferably used to support the combustion of the compressed off-gas in the combustion chamber of the gas turbine. The combustion products drive the turbine which is preferably coupled to a conventional electricity generator. In a typical instance of the first example, from 20 to 30 MW may be produced. The power generated is typically in excess of the requirements for power of the air separation plant and thus it becomes possible to export the excess electrical power.

Typically, the pressure to which the off-gas is compressed is in the order of 10 to 20 atmospheres absolute (1 to 2 MPa).

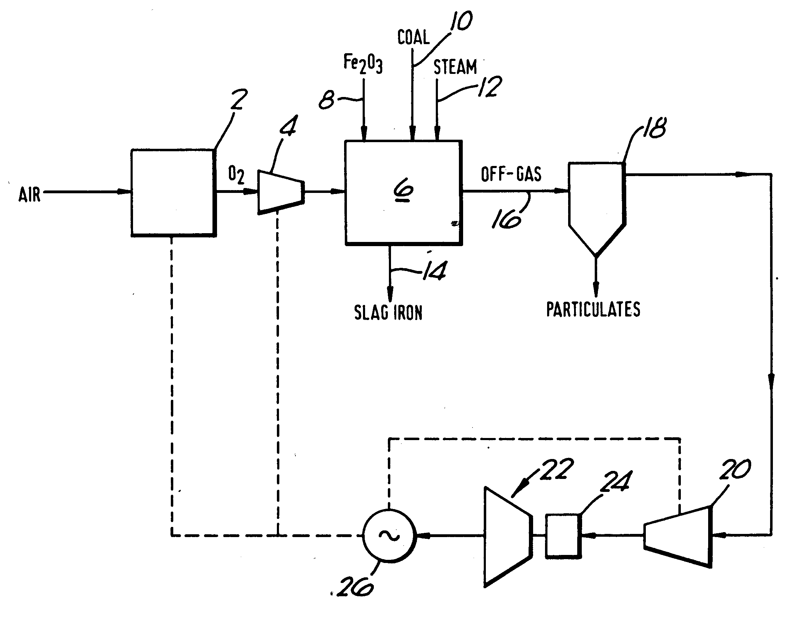

The method and plant according to the present invention will now be described by way of example with reference to the accompanying drawing which is a schematic circuit diagram representing a plant according to the present invention.

Referring to the drawing, a cryogenic air separation plant 2 produces gaseous oxygen at a pressure of about 1 atmosphere absolute. The oxygen is fed to a compressor 4 whose outlet communicates with an inlet to a plant 6 for the direct reduction of iron oxide to iron. In addition to the oxygen inlet, the plant 6 has inlets 8, 10, and 12 for iron oxide, coal and steam respectively and outlet means 14 from which molten metal and slag may alternately be taken off. (If it is desired simply to produce a gas substantially free of hydrogen the inlet 12 for steam may be omitted). In addition there is an outlet 16 for the off-gas that leads to a cyclone 18 to remove particulates from the gas. The outlet of the cyclone 18 communicates with a compressor 20 whose outlet in turn leads to the combustion chamber 24 of a gas turbine 22. The gas turbine 22 is coupled to an on-site electrical power generator (or alternator) 26. The electrical power generator 26 is employed to drive the compressor 20, the compressor 4 and the air compressor (not shown) of the air separation plant 2. In addition, the generator 26 will meet any other requirements for electrical power of the air separation plant 2. Excess electrical power generated may be exported to any convenient grid system.

In a typical example of the method according to the invention, oxygen is produced by a plant 2 at a pressure of about one atmosphere absolute. It is raised in pressure by the compressor 4 to a value of about 8 atmospheres (about 0.8 MPa). The compressed oxygen is supplied along with steam, coal and iron oxide to the plant 6. In the plant 6, the steam and coal react with the oxygen to produce primarily carbon monoxide and hydrogen. The reducing gases then react with the iron oxide to form iron, the gases themselves being reoxidised to steam and carbon dioxide. Some of the carbon dioxide is reduced again to carbon monoxide by reaction with the coal. In one example, the gas mixture formed has a calorific value in the range of 1500 to 2500 Kilocalories per cubic metre. The gas is compressed in the compressor 20 to a pressure in the order of 12 atmospheres absolute. It is then burnt in the combustion chamber 24 of the turbine 22. The amount of electrical power produced will depend on the capacity of the plant 6 and may typically be in the range 20 to 50 MW of electrical power is produced by the generator 26. This electrical power is used in part to drive the compressor 4, the compressor 20, the air compressor associated with the air separation plant 2, and to meet any other demands for electricity of the plant 2. Excess electrical power is exported to an electrical grid (not shown) Typically, the air separation plant 2 may consume about 9.2 MW of power to produce 750 tonnes per day of oxygen, the compressor 4 about 2.2 MW of power, and the compressor 10 about 3 MW of power.

## Claims

1. A method comprising:

   (a) operating a plant to separate oxygen from air;

   (b) reacting thus separated oxygen with carbon or with carbon and steam to form a reducing gas comprising carbon monoxide and (when steam is present) hydrogen, reacting the reducing gas with a metal oxide to obtain the metal and a combustible off-gas;

   (c) burning the off-gas in a combustion chamber and employing the resulting combustion products in driving a turbine which is used in the generation of electrical power on the site of the air separation plant; and

   (d) employing at least some of the electrical power to meet at least some of the requirements for electrical power of the air separation plant and/or a liquefier associated therewith,

   characterised in that the off-gas is compressed upstream of the combustion chamber and the combustion products are fed into the turbine.

2. A method as claimed in claim 1, in which the off gas is compressed to a pressure in the range of 1 to 2 MPa (10 to 20 atmospheres absolute).

3. A method as claimed in any one of the preceding claims, in which said generated electrical power meets all the requirements for electrical power of the air separation plant and for the compression of the off-gas.

4. A method as claimed in any one of the preceding claims, in which the carbon is provided in the form of coal.

5. A method as claimed in any one of the preceding claims, in which the metal oxide is an iron oxide.

6. Integrated plant comprising;
   (a) an air separation plant (2) for separating oxygen from air;
   (b) plant (6) for reacting thus separated oxygen with carbon or with carbon and steam to form a reducing gas comprising carbon monoxide and (when hydrogen is present) steam, and for reacting the reducing gas with a metal oxide to obtain the metal and a combustible off-gas;
   (c) a combustion chamber (24) for burning the off-gas to form combustion products;
   (d) a turbine (22) associated with a generator (26) of electricity;
   (e) means for employing at least some of the electrical power produced by the generator (26) to meet the requirements for electrical power of the air separation plant (2) and/or a liquefier associated therewith,
   characterised in that the integrated plant additionally includes a compressor (20) for compressing the off-gas upstream of the combustion chamber (24), and the turbine (22) has an inlet communicating with an outlet of the combustion chamber (24).

**Patentansprüche**

1. Ein Verfahren, bei dem:
   (a) eine Anlage betrieben wird, um Sauerstoff aus Luft abzutrennen;
   (b) der so abgetrennte Sauerstoff mit Kohlenstoff oder mit Kohlenstoff und Dampf zur Reaktion gebracht wird, um ein reduzierendes Gas zu bilden, welches Kohlenmonoxid und (wenn Dampf vorhanden ist) Wasserstoff aufweist, wobei das reduzierende Gas mit einem Metalloxid reagiert, um das Metall und ein brennbares Abgas zu erhalten;
   (c) das Abgas in einer Verbrennungskammer verbrannt wird und die resultierenden Verbrennungsprodukte beim Antreiben einer Turbine verwendet werden, welche bei der Erzeugung elektrischer Energie auf der Seite der Lufttrennungsanlage verwendet wird; und
   (d) mindestens ein Teil der elektrischen Energie verwendet wird, um mindestens einem Teil der Anforderungen an elektrischer Energie der Lufttrennungsanlage und/oder eines dieser zugeordneten Verflüssigers zu entsprechen,

dadurch gekennzeichnet, daß das Abgas auf der stromaufwärtigen Seite der Verbrennungskammer verdichtet wird und die Verbrennungsprodukte der Turbine zugeführt werden.

2. Ein Verfahren nach Anspruch 1, in welchem das Abgas auf einen Druck in dem Bereich von 1 bis 2 MPa (10 bis 20 absoluten Atmosphären) verdichtet wird.

3. Ein Verfahren nach irgendeinem der vorhergehenden Ansprüche, in welchem die erzeugte elektrische Energie all den Anforderungen an elektrischer Energie der Lufttrennungsanlage und an die Verdichtung des Abgases entspricht.

4. Ein Verfahren nach irgendeinem der vorhergehenden Ansprüche, in welchem der Kohlenstoff in Form von Kohle vorgesehen ist.

5. Ein Verfahren nach irgendeinem der vorhergehenden Ansprüche, in welchem das Metalloxid ein Eisenoxid ist.

6. Eine integrierte Anlage mit;
   (a) einer Lufttrennungsanlage (2) zur Abtrennung von Sauerstoff aus Luft;
   (b) einer Anlage (6) für eine Reaktion des so abgetrennten Sauerstoffs mit Kohlenstoff oder mit Kohlenstoff und Dampf, um ein reduzierendes Gas zu bilden, das Kohlenmonoxid und (wenn Wasserstoff vorhanden ist) Dampf aufweist, und für eine Reaktion des reduzierenden Gases mit einem Metalloxid, um das Metall und ein brennbares Abgas zu erhalten;
   (c) einer Verbrennungskammer (24) zur Verbrennung des Abgases, um Verbrennungsprodukte zu bilden;
   (d) einer Turbine (22), die einem Stromgenerator (26) zugeordnet ist;
   (e) einem Mittel, um wenigstens einen Teil der durch den Generator (26) erzeugten elektrischen Energie zu verwenden, um den Anforderungen an elektrischer Energie der Lufttrennungsanlage (2) und/oder eines dieser zugeordneten Verflüssigers zu entsprechen,

dadurch gekennzeichnet, daß die integrierte Anlage zusätzlich einen Kompressor (20) zur Verdichtung des Abgases auf der stromaufwärtigen Seite der Verbrennungskammer (24) einschließt und die Turbine (22) einen Einlaß besitzt, der mit einem Auslaß der Verbrennungskammer (24) in Verbindung steht.

**Revendications**

1. Procédé comprenant :

(a) l'exploitation d'une installation destinée à séparer l'oxygène de l'air ;

(b) la réaction de l'oxygène, ainsi séparé, avec du carbone ou bien avec du carbone et de la vapeur d'eau, pour former un gaz réducteur comprenant du monoxyde de carbone et (quand il y a présence de vapeur d'eau) de l'hydrogène, la réaction du gaz réducteur avec un oxyde de métal pour obtenir le métal et un gaz combustible d'échappement ;

(c) la combustion du gaz d'échappement, dans une chambre de combustion, et l'utilisation des produits résultant de la combustion pour entraîner une turbine servant à produire de l'énergie électrique sur le site de l'installation de séparation des constituants de l'air ; et

(d) l'emploi d'au moins une partie de l'énergie électrique pour satisfaire au moins une partie des exigences en énergie électrique de l'installation de séparation des constituants de l'air et/ou d'un liquéfacteur associé à cette installation,

procédé caractérisé en ce que le gaz d'échappement est comprimé, en amont de la chambre de combustion, et en ce que les produits de combustion sont introduits dans la turbine.

2. Procédé tel que revendiqué à la revendication 1, dans lequel le gaz d'échappement est comprimé jusqu'à une pression absolue comprise entre 1 et 2 MPa (10 à 20 atmosphères absolues).

3. Procédé tel que revendiqué dans l'une quelconque des revendications précédentes, dans lequel ladite énergie électrique ainsi engendrée couvre la totalité des besoins en énergie électrique de l'installation de séparation des constituants de l'air et pour la compression du gaz d'échappement.

4. Procédé tel que revendiqué dans l'une quelconque des revendications précédentes, dans lequel le carbone est fourni sous forme de charbon.

5. Procédé tel que revendiqué dans l'une quelconque des revendications précédentes, dans lequel l'oxyde de métal est un oxyde du fer.

6. Installation intégrée, comprenant :

(a) une installation (2) de séparation des constituants de l'air, pour séparer l'oxygène de l'air ;

(b) une installation (6) pour faire réagir l'oxygène, ainsi séparé, avec du carbone ou bien avec du carbone et de la vapeur d'eau, pour former un gaz réducteur comprenant du monoxyde de carbone et (en cas de présence d'hydrogène) de la vapeur d'eau, et pour faire réagir le gaz réducteur avec un oxyde de métal afin d'obtenir le métal et un gaz d'échappement, combustible ;

(c) une chambre (24) de combustion pour brûler le gaz d'échappement et former des produits de combustion ;

(d) une turbine (22), associée à un générateur (26) d'électricité ;

(e) un moyen pour utiliser au moins une partie de l'énergie électrique, produite par le générateur (26), pour répondre aux exigences en énergie électrique de l'installation (2) de séparation des constituants de l'air et/ou d'un liquéfacteur associé à cette installation,

installation caractérisée en ce que l'installation intégrée comprend en outre un compresseur (20) pour comprimer le gaz d'échappement, en amont de la chambre (24) de combustion, et en ce que la turbine (22) comporte une entrée communiquant avec une sortie de la chambre (24) de combustion.

AIR

2

$O_2$

4

$Fe_2O_3$

8

COAL

STEAM

10

12

6

SLAG IRON

14

OFF-GAS

16

18

PARTICULATES

20

22

24

26